# EUROPÄISCHE PATENTSCHRIFT

(11) **EP 3 442 717 B1**
(45) Veröffentlichungstag und Bekanntmachung des Hinweises auf die Patenterteilung: **17.08.2022**
(21) Anmeldenummer: 17717111.3
(22) Anmeldetag: 06.04.2017
(51) Int. Cl.: B05B 12/00, B05B 13/00

(54) **VERFAHREN UND FERTIGUNGSANLAGE ZUR HERSTELLUNG VON FAHRZEUGEN UND OBERFLÄCHENBEHANDLUNGSANLAGE ZUR OBERFLÄCHENBEHANDLUNG VON FAHRZEUGKAROSSERIEN**
METHOD AND PRODUCTION SYSTEM FOR PRODUCING VEHICLES, AND SURFACE TREATMENT SYSTEM FOR TREATING THE SURFACE OF VEHICLE BODIES
PROCÉDÉ ET INSTALLATION DE FABRICATION POUR LA FABRICATION DE VÉHICULES ET INSTALLATION DE TRAITEMENT DE SURFACE POUR LE TRAITEMENT DE SURFACE DE CARROSSERIES DE VÉHICULE

(30) Priorität: 13.04.2016 DE 102016004484
(43) Veröffentlichungstag der Anmeldung: 20.02.2019
(73) Patentinhaber: Eisenmann GmbH, 71032 Böblingen (DE)
(72) Erfinder: SCHWAB, Stephan, 71111 Waldenbuch (DE); GÜMBEL, Urs, 72622 Nürtingen (DE)
(74) Vertreter: Ostertag & Partner Patentanwälte mbB
(86) Internationale Anmeldenummer: PCT/EP2017/058207
(87) Internationale Veröffentlichungsnummer: WO 2017/178317

(56) Entgegenhaltungen:
- EP-A1- 2 839 886
- WO-A1-2004/041628
- DE-A1-102010 045 010
- GB-A- 644 169
- GB-A- 2 224 252
- US-A1- 2001 050 046
- US-A1- 2001 050 046
- US-A1- 2004 149 549

## Beschreibung

Die Erfindung betrifft ein Verfahren zur Herstellung von Fahrzeugen, bei welchem Fahrzeugkarosserien durch mehrere Anlagenzonen einer Fertigungsanlage zur Herstellung von Fahrzeugen gefördert werden, wobei in jeweils zwei Anlagenzonen, die aufeinander folgen, Arbeiten unterschiedlicher Art an den Fahrzeugkarosserien durchgeführt werden, wobei die Fahrzeugkarosserien mindestens von einer Korrosionsschutzbehandlung bis zu einer Endmontage in einer Oberflächenbehandlungsanlage zur Oberflächenbehandlung der Fahrzeugkarosserien mit ein und dem-selben Fördersystem durch die Anlagenzonen der Oberflächenbehandlungsanlage gefördert werden.

Außerdem betrifft die Erfindung eine Oberflächenbehandlungsanlage zur Oberflächenbehandlung von Fahrzeugkarosserien mit mehreren Anlagenzonen, wobei die Fahrzeugkarosserien in jeweils zwei Anlagenzonen, die aufeinander folgen, auf unterschiedliche Art behandelbar sind, wobei die Oberflächenbehandlungsanlage derart eingerichtet ist, dass die Fahrzeugkarosserien mit ein und demselben Fördersystem durch die Anlagenzonen der Anlage förderbar sind.

Darüber hinaus betrifft die Erfindung eine Fertigungsanlage zur Herstellung von Fahrzeugen mit einer Oberflächenbehandlungsanlage, welche zwischen einer Korrosionsschutzanlage und einer Endmontageanlage angeordnet ist.

Ein Verfahren und eine Oberflächenbehandlungsanlage der eingangs genannten Art sind in der US 2001/050046 A1 beschrieben.

Nachdem Fahrzeugkarosserien in einer Rohbauanlage aus Einzelteilen zusammengefügt wurden und in einer Korrosionsschutzanlage insbesondere durch eine kataphoretische Tauchlackierung einen Korrosionsschutz erhalten haben, werden sie vor dem Erreichen einer Endmontageanlage in einer Oberflächenbehandlungsanlage einer Oberflächenbehandlung unterzogen, welche insgesamt verhältnismäßig viele einzelne Behandlungsschritte umfasst und in der Regel mit dem Trocknen der kataphoretischen Tauchlackierung beginnt. In der Rohbauanlage werden somit Arbeiten an Fahrzeugkarosserie-Vorstufen, nämlich den einzelnen Phasen beim Zusammenfügen der Fahrzeugkarosserie, durchgeführt, während in der Endmontageanlage somit Arbeiten an Fahrzeugkarosserie-Nachstufen, nämlich den einzelnen Phasen beim Montieren von Komponenten und Bauteilen in und an der fertiggestellten Fahrzeugkarosserie, durchgeführt werden. Vorliegend fallen sowohl solche Fahrzeugkarosserie-Vorstufen als auch solche Fahrzeugkarosserie-Nachstufen unter den Begriff Fahrzeugkarosserie. Bezogen auf den Rohbau können also schon das erste Blechteil und alle dazwischenliegenden Aufbaustrukturen bis zur endgültigen Fahrzeugkarosserie als Fahrzeugkarosserie verstanden werden.

Infolgedessen umfasst eine Anlage zur Herstellung für Fahrzeugkarosserien verschiedene Anlagenzonen, die von den Fahrzeugkarosserien in einer bestimmten Abfolge durchlaufen werden müssen und in denen Arbeiten unterschiedlicher Art an den Fahrzeugkarosserien durchgeführt werden. Zu solchen Arbeiten zählen sowohl Maßnahmen, bei denen aktiv auf die Fahrzeugkarosserie eingewirkt wird oder diese verändert oder ergänzt werden, wie beispielsweise beim Zusammenfügen von Einzelteilen im Rohbau oder der Endmontage, bei einer Applikation von Material oder dem Trocknen der Fahrzeugkarosserien, als auch Maßnahmen, bei denen keine aktive Einwirkung auf die Fahrzeugkarosserie erfolgt, wie beispielsweise ein Audit oder ein Abdunsten der Fahrzeugkarosserie. In der Oberflächenbehandlungsanlage werden die Fahrzeugkarosserien im Rahmen solcher Arbeiten in den unterschiedlichen Anlagenzonen auf unterschiedliche Art behandelt.

In allen Arbeitszonen gibt es Arbeitseinrichtungen, mit oder in denen die entsprechenden Arbeiten ausgeführt werden. In der Oberflächenbehandlungsanlage sind solche Arbeitseinrichtungen entsprechend als Behandlungseinrichtungen ausgebildet.

Bei einer Rohbauanlage werden in verschiedene Anlagenzonen zum Beispiel unterschiedliche Arten der Befestigung von Blechteilen aneinander ausgeführt.

Bei einer kataphoretischen Tauchbehandlung für den Korrosionsschutz in der Korrosionsschutzanlage kann nur eine Anlagezone vorhanden sein. Es können, abhängig von Techniken, die zum Aufbringen eines Korrosionsschutzes gewählt werden und keine Tauchbehandlung oder keine alleinige Tauchbehandlung sind, aber auch mehrere Zonen vorhanden sein.

Die verschiedenen Anlagenzonen in der Oberflächenbehandlungsanlage können im Wesentlichen in Applikationszonen, Temperierzonen und Funktionszonen unterteilt werden, wobei in den einzelnen Anlagenzonen der Oberflächenbehandlungsanlage ein oder mehrere Behandlungseinrichtungen angeordnet sein können.

In den Applikationszonen werden die Fahrzeugkarosserien mit einer Beschichtung oder einem Material versehen. Zum Beispiel zählen hierzu die Applikation von Füller, Basislack oder Decklack, oder das Aufbringen von Material für den Unterbodenschutz oder von Material zum Nahtabdichten.

In den Temperierzonen werden die Fahrzeugkarosserien temperiert. Unter "Temperieren" einer Fahrzeugkarosserie ist die Herbeiführung einer bestimmten Temperatur der Fahrzeugkarosserie gemeint, die diese zunächst noch nicht besitzt. Es kann sich um eine Temperaturerhöhung oder eine Temperaturverringerung handeln. Auch das Abdunsten einer Fahrzeugkarosserie zählt vorliegend als eine Behandlung im Rahmen eines "Temperierens".

In den Funktionszonen erfolgen Maßnahmen, welche den Gesamtprozess und den Gesamtablauf unterstützen. Zum Beispiel zählen hierzu die Durchführungen von Audits und gegebenenfalls das Nachbearbeiten von Oberflächenbereichen der Fahrzeugkarosserie, die nicht dem geforderten Qualitätsstandard entsprechen. Eine andere Funktionszone bildet zum Beispiel eine Speicherzone, in dem Fahrzeugkarosserien zwischengelagert und/oder vorgehalten werden können.

Eine Endmontageanlage soll hier grundsätzlich nur eine einzige Anlagenzone definieren, da die dortigen Einbau- und Montagemaßnahmen zu Arbeiten einer Art zählen.

Bei vom Markt her bekannten Fertigungsanlagen zur Herstellung von Fahrzeugen, und insbesondere in zu solchen Anlagen gehörenden Oberflächenbehandlungsanlagen, werden die Fahrzeugkarosserien in verschiedenen Anlagenzonen mit unterschiedlichen, an die jeweiligen Anlagenzonen und dort vorhandene Arbeits- oder Behandlungseinrichtungen angepassten Fördersystemen gefördert, da die unterschiedlichen Arbeits- und Behandlungsarten bei bekannten Anlagen unterschiedliche Fördersysteme erfordern. Es kann dabei sogar vorkommen, dass bei zwei aufeinanderfolgenden Arbeits- oder Behandlungseinrichtungen ein und derselben Anlagenzone unterschiedliche Fördersysteme eingesetzt werden müssen. Bekannte solche unterschiedliche Fördersysteme, die in den verschiedenen Anlagenzonen und/oder Arbeits- oder Behandlungseinrichtungen verwendet werden, sind beispielsweise Tragkettenförderer, Rollenbahnen mit oder ohne Querverschiebewagen und Drehtischen sowie Hängebahnförderer. Dabei können die Fahrzeugkarosserien zeitweise auf sogenannten Skids, wie sie an und für sich bekannt sind, befestigt sein. Gegebenenfalls ist es zwar möglich, dass in zwei verschiedenen aufeinanderfolgenden Anlagenzonen ein und dasselbe Fördersystem verwendet werden kann, zumindest bei der letzten Arbeits- oder Behandlungseinrichtung einer ersten Anlagenzone und der ersten Arbeits- oder Behandlungseinrichtung einer nachfolgenden zweiten Anlagenzone.

In jedem Fall erfolgt zwischen zwei unterschiedlichen Fördersystemen in einem Übergabebereich eine Übergabe der Fahrzeugkarosserie von dem einen Fördersystem auf das andere Fördersystem. Gegebenenfalls wird die Fahrzeugkarosserie dabei auf einem Skid befestigt oder von einem Skid abgenommen bzw. von einem Skid einer ersten Bauart auf ein Skid einer zweiten Bauart transferiert.

Die Verwendung unterschiedlicher Fördersysteme mit oder ohne Skids ist zum einen sehr bauaufwendig. Zum anderen benötigt die jeweilige Übergabe von einem Fördersystem auf das nächste einen entsprechenden Zeitaufwand, wodurch der mögliche Gesamtdurchsatz der Oberflächenbehandlungsanlage verringert wird.

Es ist Aufgabe der Erfindung, ein Verfahren, eine Oberflächenbehandlungsanlage und eine Fertigungsanlage der eingangs genannten Art bereitzustellen, welche diesen Gedanken Rechnung tragen.

Diese Aufgabe wird bei einem Verfahren der eingangs genannten Art dadurch gelöst, dass ein Fördersystem verwendet wird, welches eine Vielzahl von Transportwagen umfasst, die in einer Transportrichtung auf einem Schienensystem verfahrbar sind, wobei jeder Transportwagen ein Transportwagen-Fahrwerk und eine Befestigungseinrichtung für zumindest eine Fahrzeugkarosserie umfasst, die mittels einer Verbindungseinrichtung miteinander gekoppelt sind;
und
die Fahrzeugkarosserien in wenigstens einer Anlagenzone in wenigstens einer Behandlungseinrichtung behandelt werden, welche ein Gehäuse umfasst, in dem ein Behandlungstunnel mit einem Tunnelboden untergebracht ist, wobei der Tunnelboden einen Verbindungsdurchgang aufweist und ein unterhalb des Behandlungstunnels angeordneter Fahrraum für das Transportwagen-Fahrwerk vorhanden ist, derart, dass das Transportwagen-Fahrwerk im Fahrraum bewegbar ist, wobei die Befestigungseinrichtung im Behandlungstunnel mitgeführt wird und sich die Verbindungseinrichtung durch den Verbindungsdurchgang hindurch erstreckt.

Erfindungsgemäß wurde hierdurch eine Trennung des Behandlungsbereichs von dem Förderbereich bewirkt und erkannt, dass es dabei möglich ist, wenigsten in einer Oberflächenbehandlungsanlage eine Abstimmung der Anlagenzonen und eines Fördersystem zu erreichen, durch welche ein einziges Fördersystem für alle Anlagenzonen der Oberflächenbehandlungsanlage geeignet ist. Hierdurch sind keine Übergaben von einem ersten Fördersystem auf ein zweites Fördersystem, welches vom ersten Fördersystem verschieden ist, mehr notwendig, wodurch der Gesamtablauf der Oberflächenbehandlung effektiver, mit geringerem baulichen Aufwand und dadurch zeitsparend und kostengünstig durchgeführt werden kann.

Besonders effektiv ist es, wenn die Fahrzeugkarosserien in einer Korrosionsschutzanlage mit demselben Fördersystem gefördert werden, wie in der Oberflächenbehandlungsanlage.

Vorzugsweise werden Fahrzeugkarosserien auch in einer Rohbauanlage mit demselben Fördersystem gefördert werden, wie in der Oberflächenbehandlungsanlage.

Besonders vorteilhaft werden Fahrzeugkarosserien zudem in einer Montageanlage mit demselben Fördersystem gefördert, wie in der Oberflächenbehandlungsanlage.

In Abkehr von bekannten Anlagen wird somit eine Fertigungsanlage betrieben, bei welcher eine Fördertechnik entwickelt wurde, die eine Abstimmung mit den Arbeits- und Behandlungstechniken ermöglicht, so dass in den einzelnen Anlagen einer Anlage zur Herstellung von Fahrzeugen, in jedem Fall jedoch in deren Oberflächenbehandlungsanlage, ein und dasselbe Fördersystem eingesetzt werden kann. Auch wenn beispielsweise an der kataphoretischen Tauchbehandlung in der Korrosionsschutzanlage festgehalten werden muss, so kann zumindest in der Oberflächenbehandlungsanlage oder ergänzend in einer oder in mehreren oder in allen der übrigen Anlagen abgesehen von der Korrosionsschutzanlage ein und dasselbe Fördersystem vorgesehen sein. Auch wenn beispielsweise in der Rohbauanlage und in der Oberflächenbehandlungsanlage ein und dasselbe Fördersystem genutzt werden kann, in der Korrosionsschutzanlage jedoch nicht, wird dadurch ein beträchtlicher Vorteil erreicht, da die Fördersystem im Rohbau und der Oberflächenbehandlung nicht unterschiedliche konzeptioniert werden müssen.

Vorteilhaft werden Transportwagen verwendet, die jeweils ein eigenes Antriebssystem mit sich führen und unabhängig voneinander angetrieben und verfahren werden. Auf diese Weise können die Fahrzeugkarosserien individuell durch die Anlagenzonen geführt werden. So können Fahrzeugkarosserien gegebenenfalls auch auf unterschiedlichen Förderstrecken durch die Anlage gefördert werden, in jedem Fall aber gut in Speicher- oder Pufferzonen bewegt werden, was bei einem zentralen Antriebssystem nicht ohne weiteres möglich ist, da die Transportwagen dazu von einem ersten Antriebssystem für eine erste Strecke entkoppelt und mit einem zweiten Antriebssystem für eine zweite Strecke gekoppelt werden müssen.

Die oben genannte Aufgabe wird bei einer Oberflächenbehandlungsanlage der eingangs genannten Art dadurch gelöst, dass das Fördersystem eine Vielzahl von Transportwagen umfasst, die in einer Transportrichtung auf einem Schienensystem verfahrbar sind, wobei jeder Transportwagen ein Transportwagen-Fahrwerk und eine Befestigungseinrichtung für zumindest eine Fahrzeugkarosserie umfasst, die mittels einer Verbindungseinrichtung miteinander gekoppelt sind;
und
wenigstens eine Anlagenzone wenigstens eine Behandlungseinrichtung umfasst, in der die Fahrzeugkarosserien behandelt werden und welche ein Gehäuse umfasst, in dem ein Behandlungstunnel mit einem Tunnelboden untergebracht ist, wobei der Tunnelboden einen Verbindungsdurchgang aufweist und ein unterhalb des Behandlungstunnels angeordneter Fahrraum für das Transportwagen-Fahrwerk vorhanden ist, derart, dass das Transportwagen-Fahrwerk im Fahrraum bewegbar ist, wobei die Befestigungseinrichtung im Behandlungstunnel mitgeführt wird und sich die Verbindungseinrichtung durch den Verbindungsdurchgang hindurch erstreckt.

Die dadurch erzielten Vorteile entsprechen den oben zum Verfahren erläuterten Vorteilen.

In diesem Fall ist es vorteilhaft, wenn Abschirmmittel vorgesehen sind, durch welche ein Kontakt wenigstens der Transportwagen-Fahrwerke mit der Tunnelatmosphäre durch den Verbindungsdurchgang hindurch zumindest vermindert wird. Auf diese Weise wird eine Belastung des Fördersystems und insbesondere der Transportwagen durch die Tunnelatmosphäre oder durch Stoffe, die in der Tunnelatmosphäre vorhanden sind, effektiv verhindert.

Wenn das Transportwagen-Fahrwerk eine in Transportrichtung vorauseilende Vorläufereinheit und eine in Transportrichtung nacheilende Nachläufereinheit umfasst, kann das System kurvengängig ausgebildet werden, wenn die Kopplungsstellen durch entsprechende Drehkupplungen ausgebildet sind.

Mit Blick auf eine Kurvengängigkeit der Transportwagen kann es dann vorteilhaft sein, wenn die Verbindungseinrichtung wenigstens zwei vertikale Gelenkstreben umfasst, welche die Vorläufereinheit und die Nachläufereinheit mit der Befestigungseinrichtung koppeln.

Für die individuelle Behandlung einer Fahrzeugkarosserie ist es günstig, wenn die Transportwagen jeweils ein eigenes Antriebssystem mit sich führen, so dass die Transportwagen unabhängig voneinander antreibbar und verfahrbar sind.

Vorzugsweise umfasst das Antriebssystem wenigstens eine Antriebsrolle, die von dem Transportwagen-Fahrwerk gelagert und auf einer Antriebslauffläche des Schienensystems abrollbar ist, und wenigstens einen Antriebsmotor für die wenigstens eine Antriebsrolle, welcher von dem Transportwagen-Fahrwerk mitgeführt wird.

Besonders von Vorteil ist es, wenn wenigstens einer der Transportwagen eine autarke Energieversorgungseinrichtung mit sich führt, mittels welcher der wenigstens eine Antriebsmotor des Transportwagens mit Energie versorgbar ist. Auf diese Weise kann auf eine Installation zur Energieversorgung entlang des Schienensystems verzichtet werden. Eine Störung der Energieversorgung eines Transportwagens beschränkt sich dann stets auf den Transportwagen selbst, so dass ein solcher defekter Transportwagen oder dessen Komponenten der Energieversorgung ausgetauscht werden können, ohne dass andere Transportwagen beeinflusst werden oder Arbeiten am Schienensystem erforderlich sind. Wenn Störungen der Energieversorgung auftreten, wenn der Transportwagen sich außerhalb des Trockners befindet, kann der Transportwagen isoliert von der Transportstrecke und den weiteren Transportwagen gewartet werden, ohne dass das Fördersystem beeinträchtigt wird.

Dabei ist es besonders günstig, wenn die autarke Energieversorgungseinrichtung wenigstens einen wiederaufladbaren Energiespeicher umfasst. Hierfür kommen insbesondere Akkumulatoren oder Kondensatoren in Betracht.

Die oben genannte Aufgabe wird bei einer Fertigungsanlage der eingangs genannten Art dadurch gelöst, dass die Oberflächenbehandlungsanlage eine Oberflächenbehandlungsanlage mit einigen oder allen der oben genannten Merkmale ist. Die Vorteile dazu entsprechen den Vorteilen, die im Zusammenhang mit dem Verfahren und der Oberflächenbehandlungsanlage erläutert wurden.

In entsprechender Weise ist es günstig, wenn in der Korrosionsschutzanlage dasselbe Fördersystem für die Fahrzeugkarosserien vorhanden ist, wie in der Oberflächenbehandlungsanlage.

Auch in der Endmontageanlage ist vorzugsweise dasselbe Fördersystem für die Fahrzeugkarosserien vorhanden, wie in der Oberflächenbehandlungsanlage.

Außerdem umfasst die Fertigungsanlage bevorzugt eine Rohbauanlage, in welcher dasselbe Fördersystem für Fahrzeugkarosserien vorhanden ist, wie in der Oberflächenbehandlungsanlage.

Nachfolgend werden Ausführungsbeispiele der Erfindung anhand der Zeichnungen näher erläutert. In diesen zeigen
- Figur 1: schematisch eine Oberflächenbehandlungsanlage für Fahrzeugkarosserien mit mehreren Anlagenzonen unterschiedlicher Funktionalität, in denen die Fahrzeugkarosserien auf unterschiedliche Art behandelt werden;
- Figur 2: eine perspektivische Ansicht eines Transportsystems für Fahrzeugkarosserien, wobei eine Tragschiene eines Schienensystems mit einem darauf verfahrbaren Transportwagen gezeigt ist, welcher ein Trans-portwagen-Fahrwerk umfasst, das über eine Verbindungseinrichtung mit einer Befestigungseinrichtung für Werkstücke verbunden ist;
- Figur 3: eine perspektivische Ansicht eines Abschnitts einer Behandlungsein-richtung einer Anlagenzone mit dem Transportsystem nach Figur 2, wobei ein Behandlungstunnel gezeigt ist, dessen Tunnelboden einen zu der Verbindungseinrichtung komplementären Verbindungsdurch-gang aufweist, der zu einem Fahrraum für das Transportwagen-Fahr-werk führt, wobei die Befestigungseinrichtung im Behandlungstunnel und das Transportwagen-Fahrwerk im Fahrraum angeordnet sind;
- Figur 4: einen Querschnitt des Behandlungstunnels nach Figur 3, wobei Abschirmmittel zum Fahrraum angedeutet sind;
- Figuren 5A bis 5F der Figur 5A: Detailschnitte mit verschiedenen Abschirmmitteln.

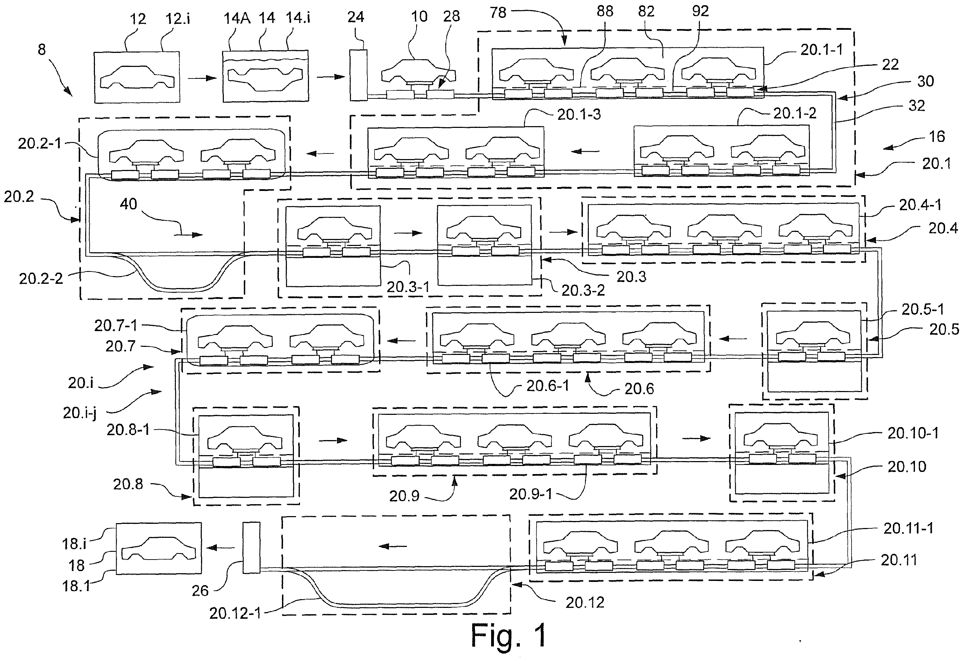

Figur 1 illustriert schematisch eine Fertigungsanlage 8 zur Herstellung von Fahrzeugkarosserien 10, welche ihrerseits einzelne Anlagen 12, 14, 16 und 18 umfasst. Die Fahrzeugkarosserien 10 gelangen nach einer Rohbauanlage 12 in eine Korrosionsschutzanlage 14 und durchlaufen im Anschluss daran eine Oberflächenbehandlungsanlage 16. Dann kommen die Fahrzeugkarosserien 10 in eine Endmontageanlage 18, in welcher die fahrbereiten Kraftfahrzeuge montiert werden. Von den Fahrzeugkarosserien 10 trägt der Übersichtlichkeit halber lediglich eine einzige ein Bezugszeichen.

Die Anlagen 12, 14, 16 und 18 können unterschiedliche, aufeinander folgende Anlagenzonen umfassen, von denen verschiedene Zonen der Rohbauanlage 12, der Korrosionsschutzanlage 14 und der Montageanlage 18 durch das Bezugszeichen derjeweiligen Anlage zuzüglich des Index ".i", also durch 12.i, 14.i bzw. 18.i, angedeutet sind. Nur die verschiedenen Zonen der Oberflächenbehandlungsanlage 16 tragen eigene Bezugszeichen 20.i. Der Index ".i" soll darstellen, dass jeweils i=1 bis n Anlagenzonen vorhanden sein können, wobei n jeweils die Gesamtzahl der Anlagenzonen 12.i, 14.i, 18.i bzw. 20.i angibt, in denen die Fahrzeugkarosserien 10 auf unterschiedliche Art behandelt werden. Wenn nur eine einzige Zone vorhanden ist, ist n folglich jeweils gleich 1. Dies ist, wie es oben erwähnt wurde, beispielsweise bei der Endmontageanlage 18 der Fall, bei der es nur eine einzige Anlagenzone 18.1 gibt. Wenn zwei aufeinanderfolgende Zonen vorhanden sind, tragen diese die Indizes "i" und "i+1".

In der Rohbauanlage 12 werden in einem Presswerk gefertigte Blechteile zu den Fahrzeugkarosserien 10 zusammengefügt. Dies kann in unterschiedlichen Rohbauanlagenzonen 12.i durch unterschiedliche bekannte Techniken erfolgen. Beispielhaft seien Punktschweißen, Bahnschweißen, Druckfügen, Nieten und Kleben genannt. Hier werden folglich Arbeiten an einer Fahrzeugkarosserie 10 durchgeführt.

In der Korrosionsschutzanlage 14 erhalten die Fahrzeugkarosserien 10 eine Korrosionsschutzbehandlung. Die Korrosionsschutzanlage 14 umfasst einzelne Korrosionsschutzanlagen-Zonen 14.i und kann als an und für sich bekannte Anlage zur kataphoretischen Tauchlackierung ausgebildet sein. Beim vorliegenden Ausführungsbeispiel ist dies der Fall, wie es in Figur 1 schematisch durch ein KTL-Tauchbad 14A angedeutet ist. Aber auch andere Korrosionsschutzbehandlungen können erfolgen, wie beispielsweise eine Applikation eines Korrosionsschutzes durch Spritzen bzw. Sprühen oder dergleichen.

In der Montageanlage 18 werden die Fahrzeugkarosserien 10 mit den notwendigen Komponenten und Bauteilen für ein fahrbereites Fahrzeug bestückt.

Die detaillierter gezeigte Oberflächenbehandlungsanlage 16 umfasst nun mehrere unterschiedliche Anlagenzonen 20.i, in denen die Fahrzeugkarosserien 10 auf unterschiedliche Art behandelt werden und die gegebenenfalls mehrere Behandlungseinrichtungen 20.i-j umfassen. Unterschiedliche Anlagenzonen 20.i sind gestrichelt eingerahmt.

Unterschiedliche, aufeinanderfolgende Anlagenzonen 20.i tragen also jeweils das Bezugszeichen 20 mit einem fortlaufenden Zahlenindex ".i", d.h. 20.1, 20.2, 20.3, usw. Behandlungseinrichtungen, die von einer Anlagenzone 20.i umfasst sind, tragen das Bezugszeichen der Anlagenzone 20.i zuzüglich eines Zahlenindex "-j". Wenn es in einer Anlagenzone 20.i lediglich eine einzige Behandlungseinrichtung gibt, trägt diese daher das Bezugszeichen 20.i-1, bei mehreren Behandlungseinrichtungen in einer Anlagenzone 20.i gibt es entsprechend Behandlungseinrichtungen 20.i-1, 20.i-2, usw.

In den übrigen Anlagen 12, 14 und 18 und den zugehörigen Anlagenzonen 12.i, 14.i und 18.i sind Arbeitseinrichtungen oder Behandlungseinrichtungen vorhanden, die vorliegend nicht gesondert gezeigt und mit Bezugszeichen versehen sind.

Die Fahrzeugkarosserien 10 werden in der Oberflächenbehandlungsanlage 16 in jeweils zwei Anlagenzonen 20.i und 20.i+1, die aufeinander folgen, auf unterschiedliche Art behandelt. Dies bedeutet, dass bei der Abfolge der Anlagenzonen 20.i durchaus mehrere Anlagenzonen 20.i vorhanden sind, in denen die Fahrzeugkarosserien 10 auf die gleiche Art behandelt werden. Die Grenze zwischen zwei benachbarten Anlagenzonen 20.i und 20.i+1 wird vorliegend dadurch definiert, dass sich die Art der Behandlung ändert. Im Sinne der oben erläuterten Einteilung kommt es also beim Übergang zwischen Applikationszonen, Temperierzonen und Funktionszonen zu einer Änderung der Art der Behandlung.

Beim vorliegenden Ausführungsbeispiel umfasst die Oberflächenbehandlungsanlage 16 exemplarisch folgende Anlagenzonen 20.i mit zugehörigen Behandlungseinrichtungen 20.i-j:
20.1 erste Temperierzone
   20.1-1 KTL-Trockner
   20.1-2 KTL-Kühleinrichtung
   20.1-3 KTL-Abdunstungseinrichtung
20.2 erste Funktionszone
   20.2-1 Audit/Schleif-Einrichtung
   20.2-2 Speichereinrichtung
20.3 erste Applikationszone
   20.3-1 Unterbodenschutz-Applikationseinrichtung
   20.3.2 Nahtabdichten-Applikationseinrichtung
20.4 zweite Temperierzone
   20.4-1 PVC-Trockner
20.5 zweite Applikationszone
   20.5-1 Füller-Applikationseinrichtung
20.6 dritte Temperierzone
   20.6-1 Füller-Trockner
20.7 zweite Funktionszone
   20.7-1 Audit/Schleif-Einrichtung
20.8 dritte Applikationszone
   20.8-1 Basislack(BC)-Lackiereinrichtung
20.9 vierte Temperierzone
   20.9-1 BC-Trockner
20.10 vierte Applikationszone
   20.10-1 Decklack(CC)-Lackiereinrichtung
20.11 fünfte Temperierzone
   20.11-1 CC-Trockner
20.12 dritte Funktionszone
   20.12-1 Speicher

Die Oberflächenbehandlungsanlage 16 ist derart eingerichtet, dass die Fahrzeugkarosserien 10 mit ein und demselben Fördersystem 22 durch die Anlagenzonen 20.i, d.h. 20.1, 20.2, ..., 20.n gefördert werden können, wobei n die Anzahl der vorhandenen Anlagenzonen angibt. Beim vorliegenden Ausführungsführungsbeispiel ist n = 12. Hierzu sind das Fördersystem 22 und die Behandlungseinrichtungen 20.i-j aufeinander abgestimmt, was weiter unten deutlich wird.

Zwischen dem Tauchbad 14A der Korrosionsschutzanlage 14 und der ersten Temperierzone 20.1 befindet sich eine Übergabeeinrichtung 24, mittels welcher eine zu behandelnde Fahrzeugkarosserie 10 von dem Fördersystem der Korrosionsschutzanlage 14 an das Fördersystem 22 der Oberflächenbehandlungsanlage 16 übergeben werden kann. In entsprechender Weise befindet sich zwischen der dritten Funktionszone 20.12, d.h. der letzten Anlagenzone der Oberflächenbehandlungsanlage 16, und der Endmontageanlage 18 eine Übergabeeinrichtung 26, mittels welcher ein behandelte Fahrzeugkarosserie 10 von dem Fördersystem 22 der Oberflächenbehandlungsanlage 16 an das Fördersystem der Endmontageanlage 18 übergeben werden kann.

Wenn das Fördersystem in der Korrosionsschutzanlage 14 und/oder der Endmontageanlage 18 dasselbe Fördersystem 22 ist, wie in der Oberflächenbehandlungsanlage 16, ist die Übergabeeinrichtungen 24 und/oder die Übergabeeinrichtung 26 nicht vorhanden. Wenn in der Rohbauanlage 12 nicht dasselbe Fördersystem genutzt wird, wie in der Korrosionsschutzanlage 14, wie es der Fall ist, wenn ein KTL-Tauchbad 14A vorhanden ist, ist zwischen diesen beiden Anlagen eine hier nicht eigens gezeigte Übergabeeinrichtung vorhanden.

Das Transportsystem 2 umfasst eine Vielzahl von Transportwagen 28, auf denen die Fahrzeugkarosserien 10 transportiert werden und welche auf einem Schienensystem 30 verfahren werden, wobei in Figur 1 nur ein einziger Transportwagen 28 sein Bezugszeichen trägt.

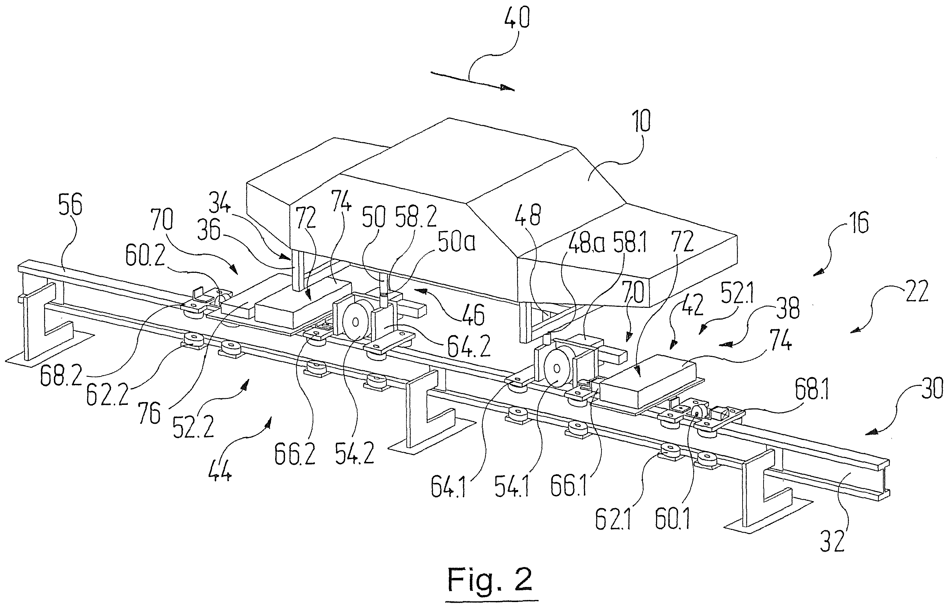

Figur 2 zeigt nun einen einzelnen Transportwagen 28 auf dem Schienensystem 30. Dieses umfasst eine Tragschiene 32, auf welcher der Transportwagen 28 verfährt und welche in an und für sich bekannter Weise als I-Profil ausgebildet und am Boden verankert ist. Die somit bodengebundene Tragschiene 32 ist einspurig. Alternativ kann auch ein mehrspuriges, insbesondere zweispuriges Schienensystem 30 vorhanden sein.

Der Transportwagen 28 umfasst eine Befestigungseinrichtung 34, an welcher eine Fahrzeugkarosserie 10 befestigt werden kann. Hierfür umfasst die Befestigungseinrichtung 34 ein Tragprofil 36 mit in den Figuren nicht zu erkennenden Lagerbolzen, welche in an und für sich bekannter Art und Weise mit Gegenelementen an der Fahrzeugkarosserie 10 zusammenarbeiten, so dass die Fahrzeugkarosserie 10 an der Befestigungseinrichtung 34 fixiert werden kann. Die Befestigungseinrichtung 34 kann auch mehrere Sätze von solchen Lagerbolzen aufweisen, die an unterschiedliche Fahrzeugkarosserien 10 mit verschiedenen Abmessungen und Ausgestaltungen angepasst sind, so dass die Befestigungseinrichtung 34 flexibel für unterschiedliche Fahrzeugkarosserietypen genutzt werden kann.

Die Befestigungseinrichtung 34 nimmt eine Fahrzeugkarosserie 10 somit unmittelbar auf, ohne dass die Fahrzeugkarosserie 10 auf einem Werkstücksträger, wie beispielsweise einem an und für sich bekannten Skid, befestigt ist.

Der Transportwagen 28 umfasst ein Transportwagen-Fahrwerk 38, welches auf der Tragschiene 32 abläuft und die Befestigungseinrichtung 34 lagert. Beim vorliegenden Ausführungsbeispiel umfasst das Transportwagen-Fahrwerk 38 eine in Transportrichtung 40 vorauseilende Vorläufereinheit 42 und eine in Transportrichtung 40 nacheilende Nachläufereinheit 44. Die Transportrichtung 40 ist in Figur 1 durch entsprechende Pfeile gekennzeichnet, von denen lediglich einer ein Bezugszeichen trägt.

Die Vorläufereinheit 42 und die Nachläufereinheit 44, d.h. allgemein das Transportwagen-Fahrwerk 38, sind über eine Verbindungseinrichtung 46 mit der Befestigungseinrichtung 34 gekoppelt. Die Kopplung ist derart eingerichtet, dass der Transportwagen 28 in der Lage ist, auch Kurvenabschnitte der Tragschiene 32 zu durchfahren. Beim vorliegenden Ausführungsbeispiel umfasst die Verbindungseinrichtung 46 zwei vertikale Gelenkstreben 48 bzw. 50, welche die Vorläufereinheit 42 und die Nachläufereinheit 44 mit der Befestigungseinrichtung 34 koppeln. Die Gelenkstreben 48, 50 ermöglichen es durch ein Gelenk 48a bzw. 50a, dass die Befestigungseinrichtung 34 um eine vertikale Drehachse gegenüber der Vorläufereinheit 42 und der Nachläufereinheit 44 verschwenken kann.

Darüber hinaus ist der Transportwagen 28 so eingerichtet, dass er auch geneigte Abschnitte, d.h. in Transportrichtung 40 gesehen Steigungsabschnitte oder Gefälleabschnitte, der Tragschiene 32 überwinden kann. Hierzu ist das Tragprofil 36 noch um jeweils eine horizontale Schwenkachse verschwenkbar an den Gelenkstreben 48, 50 befestigt.

Die Vorläufereinheit 42 und die Nachläufereinheit 44 sind weitgehend baugleich, wobei einzelne Bauteile und Komponenten auf einen geraden Abschnitt der Tragschiene 32 bezogen auf eine Ebene senkrecht zur Transportrichtung 40 gespiegelt positioniert sind. Einander entsprechende Bauteile und Komponenten der Vorläufereinheit 42 und die Nachläufereinheit 44 tragen dieselben Bezugszeichen mit den Indizes ".1" bzw. ".2". Die Vorläufereinheit 42 bildet eine Fahrwerkeinheit 52.1 und die Nachläufereinheit 44 bildet eine Fahrwerkeinheit 52.2 des Transportwagen-Fahrwerks 38 des Transportwagens 28.

Nachfolgend wird nun die Vorläufereinheit 42 erläutert; das hierzu Gesagte gilt sinngemäß entsprechend für die Nachläufereinheit 44. Die Vorläufereinheit 42 lagert eine Antriebsrolle 54.1, welche auf einer Antriebslauffläche 56 der Tragschiene 32 abrollt und mittels eines Antriebsmotors 58.1 angetrieben wird, der von der Vorläufereinheit 42 mitgeführt wird. Beim vorliegenden Ausführungsbeispiel ist die Antriebslauffläche 56 der Tragschiene 32 die Fläche auf der Oberseite des I-Profils und verläuft entsprechend in horizontalen Abschnitten der Tragschiene 32 ebenfalls horizontal. Bei nicht eigens gezeigten Abwandlungen kann die Antriebslauffläche 56 auch zum Beispiel vertikal verlaufen; in diesem Fall drückt die Antriebsrolle 54.1 als Reibrad seitlich gegen die Tragschiene 32 an.

Allgemein ausgedrückt führen die Transportwagen 28 jeweils ein eigenes Antriebssystem mit sich, so dass die Transportwagen 28 unabhängig voneinander angetrieben und verfahren werden können. Bei dem vorliegenden Ausführungsbeispiel ist das eigene Antriebssystem durch die Antriebrollen 54.1, 54.2 die zugehörigen Antriebsmotoren 58.1, 58.2 ausgebildet.

Zusätzlich zu oder anstelle von den hier erläuterten Transportwagen 28 mit eigenem Antriebssystem können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 28 können entsprechend auch unabhängig von anderen Antriebseinrichtungen angetrieben und verfahren werden.

Um zu verhindern, dass die Vorläufereinheit 42 in Transportrichtung 40 verkippt, d.h. um eine horizontale Achse senkrecht zur Transportrichtung 40, lagert die Fahrwerkeinheit 52.1 der Vorläufereinheit 42 in einem Abstand von der Antriebsrolle 54.1 eine passive Stützrolle 60.1, welche ebenfalls auf der Antriebslauffläche 56 der Tragschiene 32 abrollt. Außerdem lagert die Fahrwerkeinheit 52.1 der Vorläufereinheit 42 mehrere seitliche Führungsrollen 62.1, von denen nur zwei ein Bezugszeichen tragen und welche von beiden Seiten an der Tragschiene 32 anliegen und so in an und für sich bekannter Art und Weise ein Verkippen der Vorläufereinheit 42 zur Seite verhindern.

Beim vorliegenden Ausführungsbeispiel umfasst die Vorläufereinheit 42 einen Antriebsrahmen 64.1, welcher die Antriebsrolle 54.1 mit dem Antriebsmotor 58.1 und zu beiden Seiten der Tragschiene 32 je vier Führungsrollen 62.1 lagert. Der Antriebsrahmen 64.1 ist über eine Stütztraverse 66.1 gelenkig mit einen Stützrahmen 68.1 verbunden, welcher seinerseits die Stützrolle 60.1 und ebenfalls zu beiden Seiten der Tragschiene 32 je vier Führungsrollen 62.1 lagert. Die gelenkige Verbindung des Antriebsrahmens 64.1 mit dem Stützrahmen 68.1 erfolgt über nicht eigens mit einem Bezugszeichen versehene Kupplungsgelenke, die eine Durchfahrt von Kurvenabschnitten der Tragschiene 32 erlauben.

Beim vorliegenden Ausführungsbeispiel lagern sowohl die Vorläufereinheit 42 als auch die Nachläufereinheit 44 jeweils eine Antriebsrolle 54.1 bzw. 54.2 sowie den jeweils zugehörigen Antriebsmotor 58.1, 58.2. Bei einer nicht eigens gezeigten Abwandlung kann es ausreichen, wenn nur an der Vorläufereinheit 42 eine Antriebsrolle 54.1 mit Antriebsmotor 58.1 vorhanden ist. Das Transportwagen-Fahrwerk 38 des Transportwagens 28 jedenfalls lagert wenigstens eine Antriebsrolle und führt deren Antriebsmotor mit sich.

Für die Energieversorgung der Antriebsmotoren 58.1 und 58.2 der Vorläufereinheit 42 und der Nachläufereinheit 44 führt der Transportwagen 28 eine autarke Energieversorgungseinrichtung 70 mit sich. Darunter ist eine Energieversorgungseinrichtung zu verstehen, welche die Energieversorgung der Antriebsmotoren 58.1, 58.2 im Fahrbetrieb, d.h. während der Bewegung des Transportwagens 28, unabhängig von externen Energiequellen sicherstellt.

Beim vorliegenden Ausführungsbeispiel ist die Energieversorgungseinrichtung 70 mit wiederaufladbaren Energiespeichern 72 mit wenigstens einer Energiespeichereinheit 74 konzipiert. An jeder Fahrwerkeinheit 52.1, 52.2 ist dabei eine Energiespeichereinheit 74 für den jeweiligen Antriebsmotor 58.1, 58.2 vorhanden. Eine wiederaufladbare Energiespeichereinheit 74 für elektrische Energie kann in Form eines Akkumulators oder eines Kondensators bereitgestellt sein. Bei einer nicht eigens gezeigten Abwandlung kann auch nur eine einzige Energiespeichereinheit für beide Antriebsmotoren 58.1, 58.2 vorgesehen sein. Alternativ können auch Druckgasspeicher als Energiequelle für Druckgasantriebe vorhanden sein.

Grundsätzlich können die Transportwagen 28 auch mit Hilfe an und für sich bekannter Versorgungssysteme mit Energie versorgt werden. Hierzu zählt insbesondere eine Ausbildung, bei der die Tragschiene 32 eine stromführenden Schleifleitung umfasst, wobei die Transportwagen 28 dann entsprechende Abnahmemittel mit sich führen, welche die Schleifleitung leitend berühren. Auch bekannte berührungslose Energieübertragungseinrichtungen können eingesetzt werden.

Die Nachläufereinheit 46 trägt außerdem eine Steuereinrichtung 76, mittels welcher die Antriebsmotoren 58.1, 58.2 angesteuert und synchronisiert werden. Die Steuereinrichtung 76 kommuniziert mit einer nicht eigens gezeigten Zentralsteuerung der Oberflächenbehandlungsanlage 16.

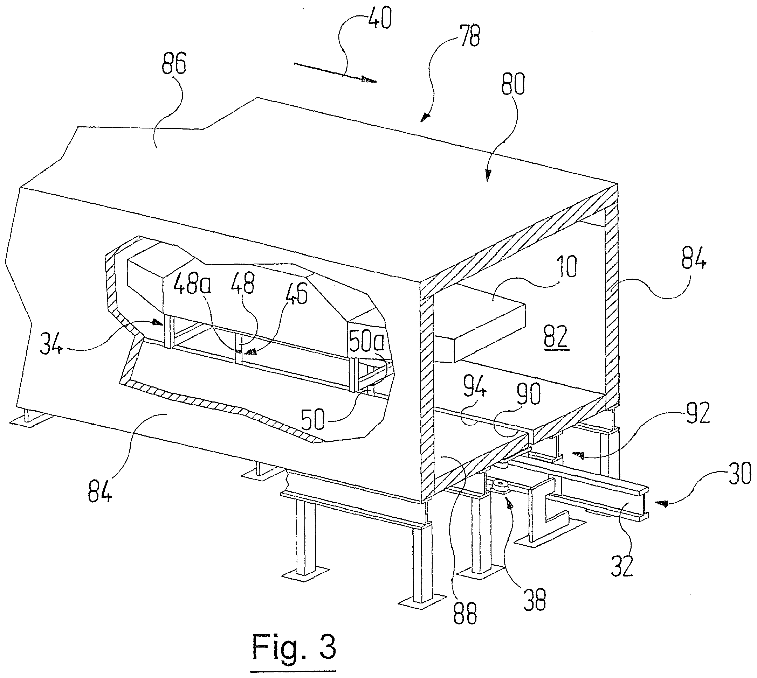

Figur 3 veranschaulicht das Grundkonzept einer Arbeitseinrichtung oder Behandlungseinrichtung in den Anlagen 12, 14, 16, 18 und zeigt insbesondere eine Behandlungseinrichtung 20.i-j, wie sie in einer der Temperierzonen 20.1, 20.4, 20.6, 20.9, 20.11 oder in einer der Applikationszonen 20.3, 20.5, 20.8, 20.10 vorgesehen sein kann, anhand einer Behandlungseinrichtung 78. Die Behandlungseinrichtung 78 steht somit exemplarisch für die beim vorliegenden Ausführungsbeispiel vorhandenen Behandlungseinrichtungen 20.i-j und die nicht eigens gezeigten Arbeits- und Behandlungseinrichtungen der übrigen Anlagen 12, 14 und 18.

Die jeweiligen, nachfolgend erläuterten Komponenten der Behandlungseinrichtung 78 spiegeln lediglich die Grundfunktionalität der Komponente wieder. So ist zum Beispiel das Gehäuse eines Trockners in bekannter Art und Weise anders ausgebildet, als beispielsweise das Gehäuse einer Lackierkabine.

Die Behandlungseinrichtung 78 umfasst ein Gehäuse 80, welches einen Behandlungstunnel 82 begrenzt und Seitenwände 84, eine Decke 86 und einen Tunnelboden 88 umfasst. Der Tunnelboden 88 weist einen zu der Verbindungseinrichtung 46 der Transportwagen 28 komplementären Verbindungsdurchgang 90 auf, der zu einem unterhalb des Trockentunnels 82 angeordneten Fahrraum 92 für das Transportwagen-Fahrwerk 38 führt, in welchem das Schienensystem 30 untergebracht ist.

In Figur 1 sind die Tunnelböden bei den Behandlungseinrichtungen 20.i-j, die funktional wie die Behandlungseinrichtung 78 aufgebaut sind, durch jeweils eine gestrichelte Linie veranschaulicht; der Übersichtlichkeit halber sind nur bei dem KTL-Trockner 20.1-1 lediglich die Behandlungseinrichtung 78, der Behandlungstunnel 82, der Tunnelboden 88 und der Fahrraum 92 mit Bezugszeichen versehen. Bei den Audit/Schleif-Einrichtungen 20.2-1 und 20.7-1 ist beispielhaft keine Trennung eines Fahrraums und eines Behandlungstunnels durch einen Tunnelboden gezeigt. Hierauf kann stets dann verzichtet werden, wenn keine Gefahr besteht, dass die Komponenten und Bauteile des Fördersystems 22 bei der Behandlung in Mitleidenschaft gezogen werden.

Der Fahrraum 92 kann zur Umgebung der Behandlungseinrichtung 78 hin offen sein; jedenfalls muss kein eigenes Gehäuse für den Fahrraum 92 vorhanden sein. Bei einer nicht eigens gezeigten Abwandlung ist der Fahrraum 92 durch ein eigenes Gehäuse begrenzt. Alternativ können sich auch die Seitenwände 84 des Gehäuses 80 nach unten über den Tunnelboden 88 hinaus erstrecken, so dass sie den Fahrraum 92 seitlich begrenzen.

Bei der Einfahrt eines mit einer Fahrzeugkarosserie 10 beladenen Transportwagens 28 in eine Behandlungseinrichtung 78 wird die Verbindungseinrichtung 46 des Transportwagens 28 also gleichsam in den Verbindungsdurchgang 90 des Tunnelbodens 88 eingefädelt. Wenn die Fahrzeugkarosserien 10 dann durch den Behandlungstunnel 82 gefördert werden, bewegt sich das Transportwagen-Fahrwerk 38 im Fahrraum 92 und führt die Befestigungseinrichtung 34 im Behandlungstunnel 82 mit sich, wobei sich die Verbindungseinrichtung 46, d.h. beim vorliegenden Ausführungsbeispiel die Gelenkstreben 48 und 50, durch den Verbindungsdurchgang 90 im Tunnelboden 88 hindurch erstreckt.

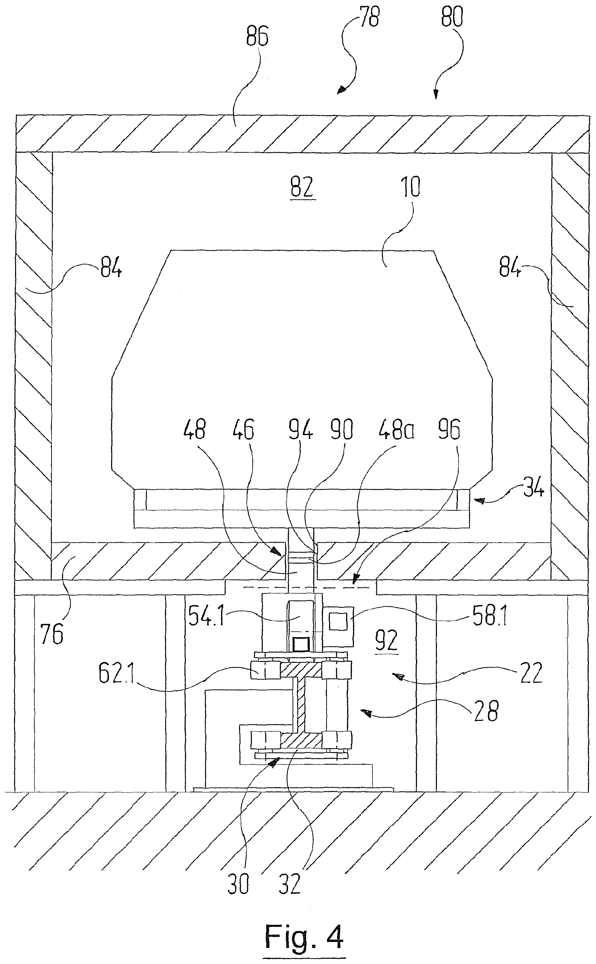

Wie in den Figuren 3 und 4 zu erkennen ist, ist der Verbindungsdurchgang 90 beim vorliegenden Ausführungsbeispiel passend zu den vertikal verlaufenden Gelenkstreben 48, 50 als vertikaler Durchgangsschlitz 94 ausgebildet. In diesem Fall könnte die Tunnelatmosphäre bei entsprechenden Strömungsverhältnissen ohne Gegenmaßnahmen weitgehend ungehindert aus dem Behandlungstunnel 82 durch den Verbindungsdurchgang 90 nach unten in den Fahrraum 92 einströmen. Bei einem Trockner ist die Tunnelatmosphäre mit Lösemittel belastet. Bei einer Lackiereinrichtung trägt die Tunnelatmosphäre insbesondere Lack-Overspray mit sich, welcher sich dann auf dem Transportwagen-Fahrwerk 38 ablagern könnte.

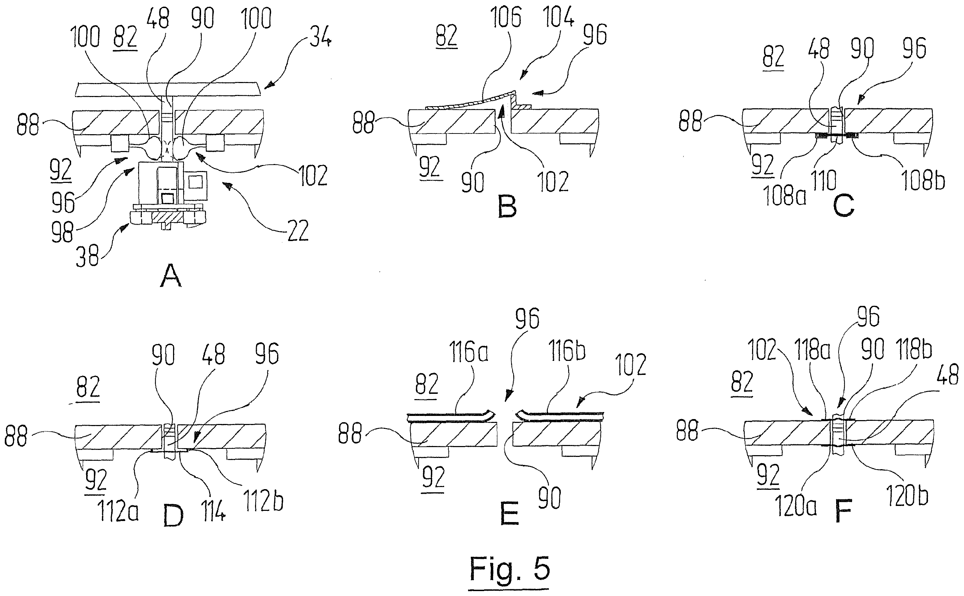

Um ein solches Ausströmen der Tunnelatmosphäre aus dem Behandlungstunnel 82 zu verhindern, sind ergänzend Abschirmmittel 96 vorgesehen, durch welche ein Kontakt wenigstens der Transportwagen-Fahrwerke 38 mit der Tunnelatmosphäre durch den Verbindungsdurchgang 90 hindurch zumindest vermindert wird. Ebenso kann das Nachströmen von Atmosphäre aus dem Fahrraum 92 in den Behandlungstunnel 82 reduziert werden, um eine stabile Atmosphäre im Behandlungstunnel 82 aufrechtzuerhalten. In Figur 4 sind die Abschirmmittel 96 lediglich schematisch angedeutet; die Figuren 5A bis 5F zeigen verschiedene Ausführungsbeispiele von Abschirmmitteln 96.

Figur 5A veranschaulicht Abschirmmittel 96 in Form einer Pressdichtung 98, bei welcher zwei Dichtwülste 100 in Längsrichtung des Behandlungstunnels 82 einander gegenüberliegen. In entspanntem Zustand, der gestrichelt angedeutet ist, liegen die Dichtwülste 100 aneinander an, so dass der Verbindungsdurchgang 90 am Tunnelboden 88 abgedeckt ist. Wenn der Transportwagen 28 in den Fahrraum 92 der Behandlungseinrichtung 78 einfährt, gelangen die Gelenkstreben 48, 50 zwischen die Dichtwülste 100, welche dadurch auseinander gedrückt werden und die Gelenkstreben 48, 50 dichtend umgeben. Die Abschirmmittel 96 bilden so eine Dichteinrichtung 102.

Figur 5B zeigt Abschirmmittel 96 in Form einer Schuppendichtung 104, bei welcher ein Vielzahl von Dichtlamellen 106 in Längsrichtung des Behandlungstunnels 82 überlappend so angeordnet sind, dass sie den Verbindungsdurchgang 90 am Tunnelboden 88 abdecken. Die Dichtlamellen 106 sind in der Praxis aus einem biegbaren Blech oder einem, gegebenenfalls temperaturbeständigen, biegbaren Kunststoff gefertigt. Wenn der Transportwagen 28 in die Behandlungseinrichtung 78 einfährt, gelangen die Gelenkstreben 48, 50 in den Verbindungsdurchgang 90 und drücken die Dichtlamellen 106 in an und für sich bekannter Art und Weise aus dem Weg, so dass immer nur im Bereich der Gelenkstreben 48, 50 ein kleines Durchtrittsfenster für Tunnelatmosphäre vorhanden ist. Durch die Schuppendichtung 102 kann über die gesamte Länge des Behandlungstunnels 82 der Effekt zumindest vermindert werden, dass Wärmestrahlung und/oder Tunnelatmosphäre nach unten in den Fahrraum 92 austritt. Auch hier bilden die Abschirmmittel 96 eine Dichteinrichtung 102.

Figur 5C zeigt ein Ausführungsbeispiel, bei welchem die Abschirmmittel 96 nur lokal für den Bereich der Antriebsmotoren 58.1, 58.2 der Transportwagen 28 wirken. Hierzu umfassen die Abschirmmittel 96 zwei Schienen 108a, 108b mit C-förmigen Querschnitt, welche den Verbindungsdurchgang 90 auf der dem Fahrraum 92 zugewandten Seite des Tunnelbodens 88 so flankieren, dass ihre offenen Seiten aufeinander zuweisen. Außerdem umfassen die Abschirmmittel 96 an jeder Gelenkstrebe 48, 50 einen Abschirmkragen 110, der komplementär zu den Schienen 108a, 108b ausgebildet ist. Die Abschirmkragen 110 sind oberhalb der Antriebsmotoren 58.1, 58.2 angeordnet und decken diese weitgehend ab, so dass die Antriebsmotoren 58.1, 58.2 zumindest gegen Wärmestrahlung und/oder Tunnelatmosphäre aus dem Behandlungstunnel 82 geschützt sind. Beim Einfahren in die Behandlungseinrichtung 78 werden die Abschirmkragen 110 an den Gelenkstreben 48, 50 in die Schienen 108a, 108b geführt, so dass sich an den Bereichen, in denen die Abschirmkragen 110 in die Schienen 108a, 108b eingreifen, eine Art Labyrinthdichtung ausbildet.

Wenn die Streckenführung in einer Behandlungseinrichtung 78 lediglich für eine Geradeausfahrt konzipiert ist, können die Abschirmkragen 110 in Längsrichtung des Behandlungstunnels 82 länger ausgebildet sein, als quer dazu. Wenn eine Kurvenfahrt in der Behandlungseinrichtung 78 angedacht ist, sind die Abschirmkragen 110 als kreisrunde Scheibe ausgebildet.

Figur 5D zeigt ein weiteres Ausführungsbeispiel, bei welchem die Abschirmmittel 96 nur lokal für den Bereich der Antriebsmotoren 58.1, 58.2 der Transportwagen 28 wirken. Hierzu umfassen die Abschirmmittel 96 zwei Schleifleisten 112a, 112b, welche den Verbindungsdurchgang 90 auf der dem Fahrraum 92 zugewandten Seite des Tunnelbodens 88 flankieren. Außerdem umfassen die Abschirmmittel 96 an jeder Gelenkstrebe 48, 50 einen Schleifkragen 114, der komplementär zu den Schleifleisten 112a, 112b ausgebildet ist und von unten gegen diese andrücken kann, wenn sich das Transportwagen-Fahrwerk 38 im Fahrraum 92 befindet. Die Schleifkragen 114 sind oberhalb der Antriebsmotoren 58.1, 58.2 angeordnet und decken diese weitgehend ab, so dass die Antriebsmotoren 58.1, 58.2 zumindest gegen Wärmestrahlung und/oder Tunnelatmosphäre aus dem Behandlungstunnel 82 geschützt sind.

Figur 5E zeigt dagegen wieder ein Ausführungsbeispiel, bei dem die Abschirmmittel 96 eine Dichteinrichtung 102 ausbilden, welche über die gesamte Länge des Behandlungstunnels 82 den Effekt zumindest vermindern kann, dass Wärmestrahlung und/oder Tunnelatmosphäre nach unten in den Fahrraum 92 austritt. Dort sind auf der dem Behandlungstunnel 82 zugewandten Seite des Tunnelbodens 88 Düsen 116a, 116b angeordnet, welche den Verbindungsdurchgang 90 zu beiden Seiten flankieren. Es gibt jeweils eine Vielzahl von Düsen 116a und 116b, welche längs des Verbindungsdurchgangs 90 in regelmäßigen Abständen angeordnet sind. Durch die Düsen 116a, 116b wird ein Trennfluid aus einer nicht eigens gezeigten Fluidquelle, z.B. Luft oder auch ein Inertgas, oberhalb des Verbindungsdurchganges 90 in den Behandlungstunnel 82 eingeblasen, wodurch eine Art Luftdichtung am Verbindungsdurchgang 90 gebildet ist. Die Austrittsöffnungen der Düsen 116a, 116b sind dabei so ausgerichtet, dass das Trennfluid mit einer Strömungskomponente nach oben in den Behandlungstunnel 82 eingeblasen wird. Bei nicht eigens gezeigten Abwandlungen können die Austrittsöffnungen auch anders ausgerichtet sein. Zum Beispiel können günstigere Strömungsverhältnisse am Verbindungsdurchgang 90 vorliegen, wenn die gegenüberliegenden Austrittsöffnungen der Düsen 116a, 116b horizontal ausgerichtet sind.

Figur 5F zeigt ein weiteres Ausführungsbeispiel, bei dem die Abschirmmittel 96 eine Dichteinrichtung 102 ausbilden, welche über die gesamte Länge des Behandlungstunnels 82 wirkt. Dort sind am Tunnelboden 88 sowohl auf der Seite zum Behandlungstunnel 82 als auch auf der Seite zum Fahrraum 92 Bürsten 118a, 118b bzw. 120a, 120b angeordnet, welche am Verbindungsdurchgang 90 aufeinander zuweisen und den Verbindungsdurchgang 90 abdecken. Die Bürsten 118a, 118b, 120a, 120b umgreifen die Verbindungseinrichtung 46 des Transportwagens 28, im vorliegenden Fall also die Gelenkstreben 58, 50, wenn der Transportwagen 28 die Behandlungseinrichtung 78 durchfährt.

Wie oben erwähnt, sind die Behandlungseinrichtungen 20.i-j konzeptionell so ausgebildet, wie die Behandlungseinrichtung 78, so dass die Verbindungseinrichtung 46 der Transportwagen 28 mit dem Tunnelboden 88 und den dort vorhandenen Abschirmmitteln 96 zusammenwirken kann. Die für die jeweilige Behandlung erforderlichen Einrichtungen sind unabhängig davon bei den jeweiligen Behandlungseinrichtungen 20.i-j vorhanden. Die sind zum Beispiel Applikations-, Lackier- und/oder Handhabungsroboter in den Applikationseinrichtungen der Applikationszonen oder zugehörige Beleuchtungseinrichtungen bei den Audit/Schleif-Einrichtungen, ebenso wie die für den Betrieb der Behandlungseinrichtungen 20.i-j notwendige Technik, beispielsweise in Form der Technik für den Lufthaushalt bei Lackierkabinen.

## Patentansprüche

1. Verfahren zur Herstellung von Fahrzeugen, bei welchem
Fahrzeugkarosserien (10) durch mehrere Anlagenzonen (12.i, 14.i, 18.i, 20.i) einer Fertigungsanlage (8) zur Herstellung von Fahrzeugen gefördert werden, wobei in jeweils zwei Anlagenzonen (12.i, 12.i+1; 14.i, 14.i+1; 18.i, 18.i+1; 20.i, 20.i+1), die aufeinander folgen, Arbeiten unterschiedlicher Art an den Fahrzeugkarosserien (10) durchgeführt werden,
wobei
die Fahrzeugkarosserien (10) mindestens von einer Korrosionsschutzbehandlung bis zu einer Endmontage in einer Oberflächenbehandlungsanlage (16) zur Oberflächenbehandlung der Fahrzeugkarosserien (10) mit ein und demselben Fördersystem (22) durch die Anlagenzonen (20.i) der Oberflächenbehandlungsanlage (16) gefördert werden;
**dadurch gekennzeichnet, dass**
ein Fördersystem (22) verwendet wird, welches eine Vielzahl von Transportwagen (28) umfasst, die in einer Transportrichtung (40) auf einem Schienensystem (30) verfahrbar sind, wobei jeder Transportwagen (28) ein Transportwagen-Fahrwerk (38) und eine Befestigungseinrichtung (34) für zumindest eine Fahrzeugkarosserie (10) umfasst, die mittels einer Verbindungseinrichtung (46) miteinander gekoppelt sind;
und
die Fahrzeugkarosserien (10) in wenigstens einer Anlagenzone (12.i, 14.i, 18.i, 20.i) in wenigstens einer Behandlungseinrichtung (20.i-j; 78) behandelt werden, welche ein Gehäuse (80) umfasst, in dem ein Behandlungstunnel (82) mit einem Tunnelboden (88) untergebracht ist, wobei der Tunnelboden (88) einen Verbindungsdurchgang (90) aufweist und ein unterhalb des Behandlungstunnels (82) angeordneter Fahrraum (92) für das Transportwagen-Fahrwerk (38) vorhanden ist, derart, dass das Transportwagen-Fahrwerk (38) im Fahrraum (92) bewegbar ist, wobei die Befestigungseinrichtung (34) im Behandlungstunnel (82) mitgeführt wird und sich die Verbindungseinrichtung (46) durch den Verbindungsdurchgang (90) hindurch erstreckt.

2. Verfahren nach Anspruch 1, **dadurch gekennzeichnet, dass** die Fahrzeugkarosserien (10) in einer Korrosionsschutzanlage (14) mit demselben Fördersystem (22) gefördert werden, wie in der Oberflächenbehandlungsanlage (16).

3. Verfahren nach Anspruch 1 oder 2, **dadurch gekennzeichnet, dass** Fahrzeugkarosserien (10) in einer Rohbauanlage (12) mit demselben Fördersystem gefördert werden, wie in der Oberflächenbehandlungsanlage (16).

4. Verfahren nach einem der Ansprüche 1 bis 3, **dadurch gekennzeichnet, dass** Fahrzeugkarosserien (10) in einer Montageanlage (18) mit demselben Fördersystem (22) gefördert werden, wie in der Oberflächenbehandlungsanlage (16).

5. Verfahren nach einem der Ansprüche 1 bis 4, **dadurch gekennzeichnet, dass** Transportwagen (28) verwendet werden, die jeweils ein eigenes Antriebssystem (54.1, 54.2, 58.1, 58.2) mit sich führen und unabhängig voneinander angetrieben und verfahren werden.

6. Oberflächenbehandlungsanlage zur Oberflächenbehandlung von Fahrzeugkarosserien (10) mit mehreren Anlagenzonen (20.i), wobei die Fahrzeugkarosserien (12) in jeweils zwei Anlagenzonen (20.i, 20.i+1), die aufeinander folgen, auf unterschiedliche Art behandelbar sind, wobei
die Oberflächenbehandlungsanlage (16) derart eingerichtet ist, dass die Fahrzeugkarosserien (10) mit ein und demselben Fördersystem (22) der Oberflächenbehandlungsanlage durch
die Anlagenzonen (20.i) der Anlage (16) förderbar sind;
**dadurch gekennzeichnet, dass**
das Fördersystem (22) eine Vielzahl von Transportwagen (28) umfasst, die in einer Transportrichtung (40) auf einem Schienensystem (30) verfahrbar sind, wobei jeder Transportwagen (28) ein Transportwagen-Fahrwerk (38) und eine Befestigungseinrichtung (34) für zumindest eine Fahrzeugkarosserie (10) umfasst, die mittels einer Verbindungseinrichtung (46) miteinander gekoppelt sind;
und
wenigstens eine Anlagenzone (20.i) wenigstens eine Behandlungseinrichtung (20.i-j; 78) umfasst, in der die Fahrzeugkarosserien (10) behandelt werden und welche ein Gehäuse (80) umfasst, in dem ein Behandlungstunnel (82) mit einem Tunnelboden (88) untergebracht ist, wobei der Tunnelboden (88) einen Verbindungsdurchgang (90) aufweist und ein unterhalb des Behandlungstunnels (82) angeordneter Fahrraum (92) für das Transportwagen-Fahrwerk (38) vorhanden ist, derart, dass das Transportwagen-Fahrwerk (38) im Fahrraum (92) bewegbar ist, wobei die Befestigungseinrichtung (34) im Behandlungstunnel (82) mitgeführt wird und sich die Verbindungseinrichtung (46) durch den Verbindungsdurchgang (90) hindurch erstreckt.

7. Oberflächenbehandlungsanlage nach Anspruch 6, **dadurch gekennzeichnet, dass** Abschirmmittel (96) vorgesehen sind, durch welche ein Kontakt wenigstens der Transportwagen-Fahrwerke (38) mit der Tunnelatmosphäre durch den Verbindungsdurchgang (90) hindurch zumindest vermindert wird.

8. Oberflächenbehandlungsanlage nach Anspruch 6 oder 7, **dadurch gekennzeichnet, dass** das Transportwagen-Fahrwerk (38) eine in Transportrichtung (40) vorauseilende Vorläufereinheit (42) und eine in Transportrichtung (40) nacheilende Nachläufereinheit (44) umfasst.

9. Oberflächenbehandlungsanlage nach Anspruch 8, **dadurch gekennzeichnet, dass** die Verbindungseinrichtung (46) wenigstens zwei vertikale Gelenkstreben (48, 50) umfasst, welche die Vorläufereinheit (42) und die Nachläufereinheit (44) mit der Befestigungseinrichtung (34) koppeln.

10. Oberflächenbehandlungsanlage nach einem der Ansprüche 6 bis 9, **dadurch gekennzeichnet, dass** die Transportwagen (28) jeweils ein eigenes Antriebssystem (54.1, 54.2, 58.1, 58.2) mit sich führen, so dass die Transportwagen (28) unabhängig voneinander antreibbar und verfahrbar sind.

11. Oberflächenbehandlungsanlage nach Anspruch 10, **dadurch gekennzeichnet, dass** das Antriebssystem (54.1, 54.2, 58.1, 58.2) wenigstens eine Antriebsrolle (54.1, 54.2) umfasst, die von dem Transportwagen-Fahrwerk (38) gelagert und auf einer Antriebslauffläche (56) des Schienensystems (30) abrollbar ist, und wenigstens einen Antriebsmotor (58.1, 58.2) für die wenigstens eine Antriebsrolle (54.1, 54.2) umfasst, welcher von dem Transportwagen-Fahrwerk (38) mitgeführt wird.

12. Oberflächenbehandlungsanlage nach einem der Ansprüche 6 bis 11, **dadurch gekennzeichnet, dass** wenigstens einer der Transportwagen (28) eine autarke Energieversorgungseinrichtung (70) mit sich führt, mittels welcher der wenigstens eine Antriebsmotor (58.1, 58.2) des Transportwagens (28) mit Energie versorgbar ist.

13. Oberflächenbehandlungsanlage nach Anspruch 12, **dadurch gekennzeichnet, dass** die autarke Energieversorgungseinrichtung (70) wenigstens einen wiederaufladbaren Energiespeicher (72) umfasst.

14. Fertigungsanlage zur Herstellung von Fahrzeugen mit einer Oberflächenbehandlungsanlage (16), welche zwischen einer Korrosionsschutzanlage (14) und einer Endmontageanlage (18) angeordnet ist,
**dadurch gekennzeichnet, dass**
die Oberflächenbehandlungsanlage (16) eine Oberflächenbehandlungsanlage (16) nach einem der Ansprüche 6 bis 13 ist.

15. Fertigungsanlage nach Anspruch 14, **dadurch gekennzeichnet, dass** in der Korrosionsschutzanlage (14) dasselbe Fördersystem (22) für die Fahrzeugkarosserien (10) vorhanden ist, wie in der Oberflächenbehandlungsanlage (16).

16. Fertigungsanlage nach Anspruch 14 oder 15, **dadurch gekennzeichnet, dass** in der Endmontageanlage (18) dasselbe Fördersystem (22) für die Fahrzeugkarosserien (10) vorhanden ist, wie in der Oberflächenbehandlungsanlage (16).

17. Fertigungsanlage nach einem der Ansprüche 14 bis 16, **dadurch gekennzeichnet, dass** sie eine Rohbauanlage (12) umfasst, in welcher dasselbe Fördersystem (22) für Fahrzeugkarosserien (10) vorhanden ist, wie in der Oberflächenbehandlungsanlage (16).

## Claims

1. A method for producing vehicles in which
vehicle bodies (10) are conveyed through multiple system zones (12.i, 14.i, 18.i, 20.i) of a production system (8) for producing vehicles, wherein different types of work are carried out on the vehicle bodies (10) in two respective system zones (12.i, 12.i+1; 14.i, 14.i+1; 18.i, 18.i+1; 20.i, 20.i+1) which follow each other,
wherein
the vehicle bodies (10) are conveyed through the system zones (20.i) of the surface treatment system (16) at least from a corrosion protection treatment to a final assembly using one and the same conveyor system (22) in a surface treatment system (16) for treating the surface of the vehicle bodies (10);
**characterized in that**
a conveyor system (22) is used, which comprises a plurality of transport carriages (28), which can be moved in a transport direction (40) on a rail system (30), wherein each transport carriage (28) comprises a transport carriage chassis (38) and a fastening device (34) for at least one vehicle body (10) which are coupled to each other by means of a connecting device (46);
and
the vehicle bodies (10) are treated in at least one system zone (12.i, 14.i, 18.i, 20.i) in at least one treatment device (20.i-j; 78), which comprises a housing (80), in which a treatment tunnel (82) with a tunnel floor (88) is accommodated, wherein the tunnel floor (88) comprises a communication passage (90), and a driving space (92) for the transport carriage chassis (38) exists, which is arranged below the treatment tunnel (82), such that the transport carriage chassis (38) can be moved within the driving space (92), wherein the fastening device (34) is carried along in the treatment tunnel (82), and the connecting device (46) extends through the communication passage (90).

2. The method according to patent claim 1, **characterized in that** the vehicle bodies (10) are conveyed in a corrosion protection system (14) with the same conveyor system (22) as in the surface treatment system (16).

3. The method according to patent claim 1 or 2, **characterized in that** the vehicle bodies (10) in a body-in-white plant (12) are conveyed with the same conveyor system (22) as in the surface treatment system (16).

4. The method according to any one of claims 1 to 3, **characterized in that** the vehicle bodies (10) in an assembly system (18) are conveyed with the same conveyor system (22) as in the surface treatment system (16).

5. The method according to any one of claims 1 to 4, **characterized in that** transport carriages (28) are used, which each have their own drive system (54.1, 54.2, 58.1, 58.2), and are driven and moved independently of each other.

6. A surface treatment system for surface treatment of vehicle bodies (10) with multiple system zones (20.i), wherein the vehicle bodies (10) can be treated in different ways in two respective system zones (20.i, 20.i+1) which follow each other,
wherein
the surface treatment system (16) is designed in such a way that vehicle bodies (10) can be conveyed through the system zones (20.i) of the system (16) using one and the same conveyor system (22) of the surface treatment system (16);
**characterized in that**
the conveyor system (22) comprises a plurality of transport carriages (28), which can be moved in a transport direction (40) on a rail system (30), wherein each transport carriage (28) comprises a transport carriage chassis (38) and a fastening device (34) for at least one vehicle body (10) which are coupled to each other by means of a connecting device (46);
and
at least one system zone (20.i) comprises at least one treatment device (20.i-j; 78), in which the vehicle bodies (10) are treated, and which comprises a housing (80), in which a treatment tunnel (82) with a tunnel floor (88) is accommodated, wherein the tunnel floor (88) comprises a communication passage (90), and a driving space (92) for the transport carriage chassis (38) exists, which is arranged below the treatment tunnel (82), such that the transport carriage chassis (38) can be moved within the driving space (92), wherein the fastening device (34) is carried along in the treatment tunnel (82), and the connecting device (46) extends through the communication passage (90).

7. The surface treatment system according to patent claim 6, **characterized in that** shielding means (96) are provided, by means of which a contact of at least the transport carriage chassis (38) with tunnel atmosphere through the communication passage (90) is at least diminished.

8. The surface treatment system according to patent claim 6 or 7, **characterized in that** the transport carriage chassis (38) comprises a leading unit (42) leading in transport direction (40) and a trailing unit (44) trailing in transport direction (40).

9. The surface treatment system according to patent claim 8, **characterized in that** the connecting device (46) comprises at least two vertical articulated struts (48, 50) which couple the leading unit (42) and the trailing unit (44) with the fastening device (34).

10. The surface treatment system according to any one of claims 6 to 9, **characterized in that** transport carriages (28) each carry along their own drive system (54.1, 54.2, 58.1, 58.2), so that the transport carriages (28) can be driven and moved independently of each other.

11. The surface treatment system according to patent claim 10, **characterized in that** the drive system (54.1, 54.2, 58.1, 58.2) comprises at least one driving roller (54.1, 54.2), which is supported by the transport carriage chassis (38) and can roll on a drive running surface (56) of the rail system (30), and comprises at least one drive motor (58.1, 58.2) for the at least one driving roller (54.1, 54.2) which is carried along by the transport carriage chassis (38).

12. The surface treatment system according to any one of claims 6 to 11, **characterized in that** at least one of the transport carriages (28) has a self-sufficient energy supply system (70), by means of which the at least one drive motor (58.1, 58.2) of the transport carriage (28) can be supplied with energy.

13. The surface treatment system according to patent claim 12, **characterized in that** the self-sufficient energy supply system (70) comprises at least one rechargeable energy storage unit (72).

14. A production system for producing vehicles comprising a surface treatment system (16) which is arranged between a corrosion protection system (14) and a final assembly system (18), **characterized in that**
the surface treatment system (16) is a surface treatment system (16) according to any one of claims 6 to 13.

15. A production system according to patent claim 14, **characterized in that** in the corrosion protection system (14) the same conveyor system (22) for the vehicle bodies (10) exists as in the surface treatment system (16).

16. The production system according to patent claim 14 or 15, **characterized in that** in the final assembly system (18) the same conveyor system (22) for the vehicle bodies (10) exists as in the surface treatment system (16).

17. The production system according to patent claim 14 or 15, **characterized in that** it comprises a body-in-white plant (12), in which the same conveyor system (22) for vehicle bodies (10) exists as in the surface treatment system (16).

## Revendications

1. Procédé pour la fabrication de véhicules, dans lequel
des carrosseries (10) de véhicule sont transportées à travers plusieurs zones d'installation (12.i, 14.i, 18.i, 20.i) d'une installation de fabrication (8) pour la fabrication de véhicules, dans lequel des travaux de différents types sont réalisés sur les carrosseries (10) de véhicule dans à chaque fois deux zones d'installation (12.i, 12.i+1; 14.i, 14.i+1; 18.i, 18.i+1; 20.i, 20.i+1) qui se suivent,
dans lequel
les carrosseries (10) de véhicule sont transportées au moins d'un traitement de protection contre la corrosion jusqu'au montage final dans une installation (16) de traitement de surface pour le traitement de surface des carrosseries (10) de véhicule à l'aide d'un seul et même système de transport (22) à travers les zones d'installation (20.i) de l'installation (16) de traitement de surface;
**caractérisé en ce que**
un système de transport (22) est utilisé, comportant une pluralité de chariots de transport (28), qui sont déplaçables dans une direction de transport (40) sur un système de rail (30), dans lequel chaque chariot de transport (28) comporte un châssis de chariot de transport (38) et un dispositif de fixation (34) pour au moins une carrosserie (10) de véhicule, qui sont couplés entre eux par l'intermédiaire d'un dispositif de raccordement (46);
et
les carrosseries (10) de véhicule sont traités dans au moins une zone d'installation (12.i, 14.i, 18.i, 20.i) dans au moins un dispositif de traitement (20.i-j; 78), qui comporte un boîtier (80), dans lequel est placé un tunnel de traitement (82) avec un fond de tunnel (88), dans lequel le fond de tunnel (88) comporte un passage de communication (90), et un espace de conduite (92) pour le châssis de chariot de transport (38) existe, qui est agencé en-dessous du tunnel de traitement (82), de manière à ce que le châssis de chariot de transport (38) soit mobile dans l'espace de conduite (92), dans lequel le dispositif de fixation (34) est emporté dans le tunnel de traitement (82), et le dispositif de raccordement (46) s'étend à travers le passage de communication (90).

2. Procédé selon la revendication 1, **caractérisé en ce que** les carrosseries (10) de véhicule dans une installation (14) de protection contre la corrosion sont transportées avec le même système de transport (22) que dans l'installation (16) de traitement de surface.

3. Procédé selon la revendication 1 ou 2, **caractérisé en ce que** les carrosseries (10) de véhicule dans une installation caisse en blanc (12) sont transportés avec le même système de transport (22) que dans l'installation (16) de traitement de surface.

4. Procédé selon l'une quelconque des revendications 1 à 3, **caractérisé en ce que** des carrosseries (10) de véhicule dans une installation de montage (18) sont transportées avec le même système de transport (22) que dans l'installation (16) de traitement de surface.

5. Procédé selon l'une quelconque des revendications 1 à 4, **caractérisé en ce que** des chariots de transport (28) sont utilisés, qui comportent chacun un système d'entraînement (54.1, 54.2, 58.1, 58.2) propre, et sont entraînés et déplacés indépendamment les uns des autres.

6. Installation de traitement de surface pour le traitement de surface des carrosseries (10) de véhicule avec plusieurs zones d'installation (20.i), dans lequel les carrosseries (10) de véhicule dans à chaque fois deux zones d'installation (20.i, 20.i+1), qui se suivent, peuvent être traitées de différentes manières,
dans lequel
l'installation (16) de traitement de surface est conçue de manière à ce que les carrosseries (10) de véhicule puissent être transportées à travers les zones d'installation (20.i) de l'installation (16) à l'aide d'un seul et même système de transport (22) de l'installation de traitement de surface;
**caractérisé en ce que**
le système de transport (22) comporte une pluralité de chariots de transport (28), qui peut se déplacer dans une direction de transport (40) sur un système de rail (30), dans lequel chaque chariot de transport (28) comporte un châssis de chariot de transport (38) et un dispositif de fixation (34) pour au moins une carrosserie (10) de véhicule, qui sont couplés entre eux par l'intermédiaire d'un dispositif de raccordement (46);
et
au moins une zone d'installation (20.i) comporte au moins un dispositif de traitement (20.i-j; 78), dans lequel les carrosseries (10) de véhicule sont traitées, et qui comporte un boîtier (80), dans lequel est placé un tunnel de traitement (82) avec un fond de tunnel (88), dans lequel le fond de tunnel (88) comporte un passage de communication (90), et un espace de conduite (92) pour le châssis de chariot de transport (38) existe, qui est agencé en-dessous du tunnel de traitement (82), de manière à ce que le châssis de chariot de transport (38) soit mobile dans l'espace de conduite (92), dans lequel le dispositif de fixation (34) est emporté dans le tunnel de traitement (82), et le dispositif de raccordement (46) s'étend à travers le passage de communication (90).

7. Installation de traitement de surface selon la revendication 6, **caractérisé en ce que** des moyens de blindage (96) sont prévus, par lesquels un contact au moins des châssis de chariot de transport (38) avec l'atmosphère du tunnel à travers le passage de communication (90) est au moins diminué.

8. Installation de traitement de surface selon la revendication 6 ou 7, **caractérisé en ce que** le châssis de chariot de transport (38) comporte une unité précurseur (42) devançant dans la direction de transport (40) et une unité de suivi (44) suivant dans la direction de transport (40).

9. Installation de traitement de surface selon la revendication 8, **caractérisé en ce que** le dispositif de raccordement (46) comporte au moins deux entretoises articulées (48, 50) verticales, qui couplent l'unité précurseur (42) et l'unité de suivi (44) avec le dispositif de fixation (34).

10. Installation de traitement de surface selon l'une quelconque des revendications 6 à 9, **caractérisé en ce que** les chariots de transport (28) emportent chacun un système d'entraînement (54.1, 54.2, 58.1, 58.2) propre, de sorte que les chariots de transport (28) peuvent être entraînés et déplacés indépendamment les uns des autres.

11. Installation de traitement de surface selon la revendication 10, **caractérisé en ce que** le système d'entraînement (54.1, 54.2, 58.1, 58.2) comporte au moins un galet d'entraînement (54.1, 54.2), qui est supporté par le châssis de chariot de transport (38) et peut être roulé sur une surface de roulement d'entraînement (56) du système de rail (30), et comporte au moins un moteur d'entraînement (58.1, 58.2) pour l'au moins un galet d'entraînement 4054.1, 54.2), qui est emporté par le châssis de chariot de transport (38).

12. Installation de traitement de surface selon l'une quelconque des revendications 6 à 11, **caractérisé en ce que** l'au moins un des chariots de transport (28) emporte une installation d'alimentation en énergie (70) autonome, par l'intermédiaire de laquelle l'au moins un moteur d'entraînement (58.1, 58.2) du chariot de transport (28) peut être alimenté en énergie.

13. Installation de traitement de surface selon la revendication 12, **caractérisé en ce que** l'installation d'alimentation en énergie (70) autonome comporte au moins un accumulateur d'énergie rechargeable (72).

14. Installation de fabrication pour la fabrication de véhicules avec une l'installation (16) de traitement de surface, qui est agencée entre une installation (14) de protection contre la corrosion et une installation de montage final (18),
**caractérisé en ce que**
l'installation (16) de traitement de surface est une l'installation (16) de traitement de surface selon l'une quelconque des revendications 6 à 13.

15. Installation de fabrication selon la revendication 14, **caractérisé en ce que** dans l'installation (14) de protection contre la corrosion le même système de transport (22) pour les carrosseries (10) de véhicule existe que dans l'installation (16) de traitement de surface.

16. Installation de fabrication selon la revendication 14 ou 15, **caractérisé en ce que** dans l'installation de montage final (18) le même système de transport (22) pour les carrosseries (10) de véhicule existe que dans l'installation (16) de traitement de surface.

17. Installation de fabrication selon l'une quelconque des revendications 14 à 16, **caractérisé en ce qu'**elle comporte une installation caisse en blanc (12), dans laquelle le même système de transport (22) pour les carrosseries (10) de véhicule existe que dans l'installation (16) de traitement de surface.
